# EUROPEAN PATENT APPLICATION

(11) **EP 1 174 592 A1**
(43) Date of publication of application: **23.01.2002**
(21) Application number: 00830507.0
(22) Date of filing: 19.07.2000
(51) Int. Cl.: F01L 1/02, F16H 55/18

(54) **Device for avoiding backlash in toothed gearing**

(71) Applicant: Vertemati Racing di Vertemati Guido s.a.s., 20050 Triuggio (MI) (IT)
(72) Inventor: Vertemati, Alvaro, 20050 Triuggio (MI) (IT)
(74) Representative: Tansini, Elio Fabrizio

(57) **Abstract**

A transmission device for actuating members of intake and/or exhaust valves in internal combustion engines comprises: an initial driving element (2), connectable with a mechanical power source (2a); intermediate driving elements (3) mutually interconnected in a preestablished transmission sequence starting from the initial driving element (2); a final driving element (4) capable of being interlocked with valve actuation means (4a), operatively connected with at least one intermediate driving element; one of the intermediate driving elements (3) comprises a main adjusting element (5) kinematically interposed between, and directly or indirectly simultaneously active on, the initial driving element (2) and the final driving element (4) to keep them in mutual timed relationship.

## Description

The present invention relates to a transmission device, preferably for actuating members of intake and/or exhaust valves in internal combustion engines.

It is known that in internal combustion engines opening (and in some particular cases closing too) of the intake and/or exhaust valves is driven by appropriate members, called timing members, regulating and synchronizing opening of the suction and/or exhaust ducts (by exactly lifting the respective valves); typically, the timing gears are based on valve guide members that presently generally consist of one or more camshafts (suitably shaped and mutually timed depending on the performance to be obtained from the engine); it is to be noted that camshafts can directly act on the valve stems or can cause movement of same through a tappet system; obviously, selection from the different construction architectures is carried out based on the cost and performance requirements to be obtained from the engine.

Camshafts cause lift of the valve or valves with which they are interlocked, thereby defining succession of the typical operating strokes, i.e. inlet, compression, combustion and expansion strokes (and even temporary superposition of these strokes should this be necessary, such as in very high performance engines in which admission of the charge of fresh air/fuel mixture is utilized to push the burnt and expanded gases out of the combustion chamber).

Operation of these camshafts relies on the engine itself and consequently part of the work developed during combustion is employed to set the camshafts in motion; exploitation of this percentage of mechanical work is accomplished through appropriate kinematic driving mechanisms which are connected at one end to the driving shaft and transmit the rotatory motion to the valve guide members (which rotatory motion is mediated by an appropriate reduction ratio and related to the drive shaft motion through a preestablished or varying timing).

The kinematic chains for transmitting motion from the driving shaft to the camshafts are embodied by one or more chains, operatively connected to gearwheels, or by a series of belts driving a series of pulleys.

In addition to these timing system typologies there is also a solution based on defining a kinematic mechanism comprising a series of gears mutually connected with each other; in this case reference is currently made, at least by those skilled in the art, to a timing system consisting of cams guided by gears, and more specifically, the kinematic mechanism for transmitting motion to the camshafts is called "gear train" or also "gear cascade".

The last-mentioned timing system typology is particularly adapted for high power engines, or at all events engines intended to give high rotation speeds because it does not show the drawbacks connected with the intrinsic deformability of the previously described elements for transmitting motion (chains and belts), which lead to an important lack of balance in the nominal engine timing (thereby imposing an important limit to the engine in terms of performance increase); indeed, this timing system is rather widespread and can be found in many modern engines for cars and motorcycles, mounted on sports motor-vehicles or at all events high-performance motor-vehicles.

At this point it is to be noted that gear cascades must keep a very high mating accuracy in the most different use conditions of the engine; therefore, gears must be always synchronized, also in case of thermal expansions or axial deviations to which they are submitted by effect of vibrations and/or forces of inertia during the vehicle running.

For the above reason, in timing gear systems a series of adjusting gearwheels is generally present, said wheels acting on the other gearwheels to bring them again in timed relationship. The adjusting wheels generally consist of a main gear (transmitting motion in a steady state) to which a recovery gear is coaxially mounted. The recovery gear can rotate on the same rotation axis of the main gear and is spring linked to the latter by a series of springs (interposed between the two surfaces of the gearwheels themselves) so that if for any reason synchronism between the main gear and the following element in the cascade is lacking or is beyond the design tolerances, the inner return action of the springs enables the main wheel teeth to be brought again into contact with those of the substitute wheel in the gear chain, so that the phase displacement is eliminated and rotation of the camshaft is brought back to correct timing.

In spite of the above, it is however to be noted that the just-described known art has some drawbacks.

In fact, since for each mating of gearwheels in the gear cascade one of the wheels is required to have an adjusting device (since backlashes can be generated in each gear pair during operation), the gear cascades of known type are very bulky, above all at the gears directly connected to the camshafts; this is due to the necessity to use gearwheels having a diameter adapted to house the return springs, and this technical limitation adversely affects balancing of the rotating masses (exactly the gears) and compactness of the engine case (the last-mentioned problem being particularly important in motorcycle engines, since the engine sizes greatly affect the motorcycle's handling parameters.

In addition, due to the necessity to dispose of a gear provided with an adjusting device for each subsequent gear, rather long cascades are obtained, which will give rise to further bulkiness problems; furthermore these cascades are of difficult overhauling and/or servicing.

A further problem present in gear cascades of known type resides in that, in spite of the presence of adjusting devices, gears are planned to operate under given thermal conditions (which is determined by friction heating as generated by contact of the teeth of the rotating wheels and also by the thermal flow from the walls of the combustion chambers to which the gear cascades are usually close); consequently out of the steady operating conditions, a backlash can be created by the tolerances between the different components of the kinematic timing system, which will generate noise and promote wear of the parts in mutual contact, thereby reducing reliability and useful life of the engine itself.

In connection with the last-mentioned drawback, it is also to be noted that when timing gear systems of known type work under their design temperature, backlashes between the gearwheels cause a non negligible mechanical noise which can be contained within limits by indirect interventions (such as interposition of acoustic-insulation walls, for example), which are not always possible or suitable.

In an attempt to eliminate the just discussed drawbacks at least partly, a technical characteristic was implemented which consists in "caging" two or more gears meshing with each other within a holding structure which is practically undeformable with respect to the gears themselves, above all from a thermal point of view (in other words, the mutually-in-contact gears are maintained in place by a metal framework having a negligible thermal expansion coefficient as compared with that of the gears themselves).

According to this technique, the holding structure avoids backlashes between the gears being created, irrespective of the operating temperature and above all the deformations to which the gears can be submitted (since the distance between the rotation centres of these gears is practically established by the relative capability of the holding structure itself of being undeformable). It is to be noted at this point that the holding structure can comprise either all the cascade gears or only a pair of same; in both cases, the gears comprised in the holding structure do not need adjusting wheels.

This technical solution too however has some drawbacks: first of all the presence of the holding structure increases bulkiness of the timing system still more, and in addition a greater complexity in the engine case construction is made necessary since these engine cases are to be provided with appropriate housing and locking seatings (threaded seatings or locating projections, for example) for the structure itself, that generally must not be allowed to move freely within the engine.

In addition, the holding structure is rather heavy (as it is generally made of steel, whereas the gears can be made of an aluminium alloy); this fact adversely affects the general engine architecture which is made heavy above all in the case of architectures contemplating the presence of several cylinder groups and therefore several gear cascades to control the camshafts of the different groups.

A further drawback consists in that generally the combination of construction elements of different metal materials makes it difficult to foresee possible technical deformations: in this particular case, it is to be noted that the different constituent materials of the "caged" gears and the holding structure lead to a great complication in the interface region (i.e. the seatings in the holding structure in which the gearwheel pins are housed), to the detriment of reliability and servicing simplicity.

In the light of the above, it is a fundamental aim of the present invention to provide a transmission device for actuating members of intake and/or exhaust valves in internal combustion engines capable of substantially obviating the mentioned drawbacks.

In particular, within the technical aims of the present invention there is that of accomplishing a transmission device preferably for actuating members of intake or exhaust valves in internal combustion engines adapted to enable an optimal timing of the intake and/or exhaust valves of an internal combustion engine to be maintained, irrespective of the thermal conditions, rotation speed, wear or deformation degree of the gears of the kinematic timing system, in order to achieve a high engine efficiency and keep this efficiency in time even under particularly heavy use conditions (in case of use for sports purposes or even competitive purposes, for example).

It is a further aim of the invention to devise a transmission device having a simplified structure as compared with the embodiments of known type, while at the same time offering more reliability and easy access for servicing and/or adjustment.

The present invention also aims at providing a transmission device for timing systems in a reciprocating engine which is of reduced bulkiness and in addition does not need construction of a particularly complicated engine case, so that a compact and lightweight engine can be obtained and consequently the dynamic qualities of the vehicle on which the engine is mounted can be increased.

It is a still further aim of the present invention to provide a transmission device for actuating members of intake and/or exhaust valves in internal combustion engines which is of excellent operation even in terms of mechanical noise, above all under work conditions in which a particularly low temperature may generate backlashes between the mutually meshing teeth.

Further features and advantages will become more apparent from the detailed description of a preferred but not exclusive embodiment of a transmission device preferably for actuating members of intake and/or exhaust valves in internal combustion engines in accordance with the invention. This description will be taken hereinafter with reference to the accompanying drawings, given by way of non-limiting example, in which:
- Fig. 1 is a sectional front view of an element of the transmission device in accordance with the present invention;
- Fig. 2 is a diagrammatic front view of a transmission device containing the element shown in Fig. 1;
- Fig. 3 is a diagrammatic side view of the device in Fig. 2;
- Fig. 4 is a diagrammatic front view of an alternative embodiment of the device shown in Figs. 2 and 3; and
- Fig. 5 is a diagrammatic side view of the device shown in Fig. 4.

With reference to the drawings, a transmission device in accordance with the present invention has been generally identified by reference numeral 1.

In accordance with the invention, the transmission device essentially consists of a train of gears disposed in a predetermined transmission sequence and mating two by two according to gear ratios selected depending on current requirements.

The device 1 picks up the required mechanical energy for operation of the camshafts (or in general the actuating members of the valves in the cylinder head) through an initial driving element 2 which typically can be connected to a mechanical power source 2a (which can be the driving shaft). Obviously, connection of this initial driving element 2 can be a direct connection, i.e. it can be directly fitted on the shaft, or connection can take place through an appropriate reduction system (of a known type).

Going on along the gear cascade, there is a predetermined number of intermediate driving elements 3 which are mutually interconnected (exactly in cascade) following the mentioned transmission sequence starting from the initial driving element 2. Conveniently, the transmission sequence (mainly made up of the intermediate driving elements 3) is used to transmit motion from the initial driving element 2 and possibly multiply the angular rotation speed from the mechanical power source 2a by a given factor (in order to achieve the desired valve timing).

At the end of the gear cascade there is a final driving element 4 which is conveniently connected to one of the intermediate driving elements 3 (typically the last one in the transmission sequence); the final driving element can be interlocked with valve actuation means 4a which conveniently can be embodied by camshafts.

Advantageously, the intermediate driving elements 3 comprise at least one main adjusting element 5 which is at a given location in the transmission sequence of the driving elements 3.

In particular, the main adjusting element 5 is kinematically interposed between the initial driving element 2 and the final driving element 4; advantageously, the main adjusting element 5 is simultaneously active (either directly or indirectly, depending on the instances provided by the present invention) on the initial driving element 2 and the final driving element 4 to keep them in mutual timed relationship.

In more detail, the device in accordance with the present invention can provide for the main adjusting element 5 to be directly connected, or in other words said element can directly mesh, with the initial driving element 2; likewise, the main adjusting element 5 can be directly connected (still by direct meshing) with the final driving element 4.

Advantageously, the initial driving element 2, final driving element 4, intermediate driving elements 3 (of which the main adjusting element 5 is part) substantially consist of gearwheels; in accordance with the present invention these gearwheels are disposed in meshing relationship according to a given transmission sequence (starting from the initial driving element 2 through the intermediate driving elements 3 and until the final driving element 4); in this way, motion is duly transmitted to the valve actuating members, while the main adjusting element 5 helps in eliminating possible phase displacements resulting from disturbance in the operating conditions.

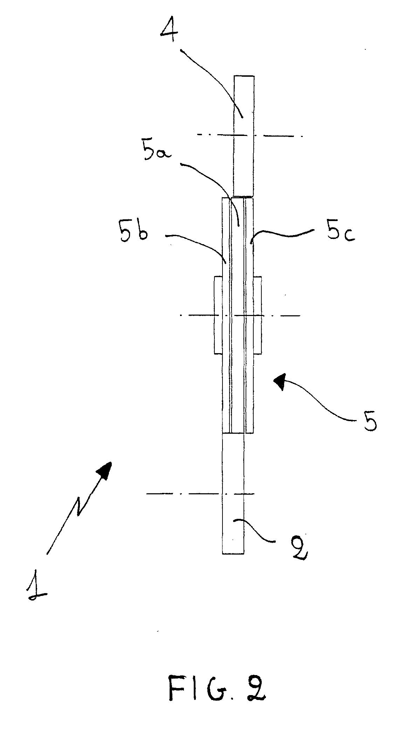

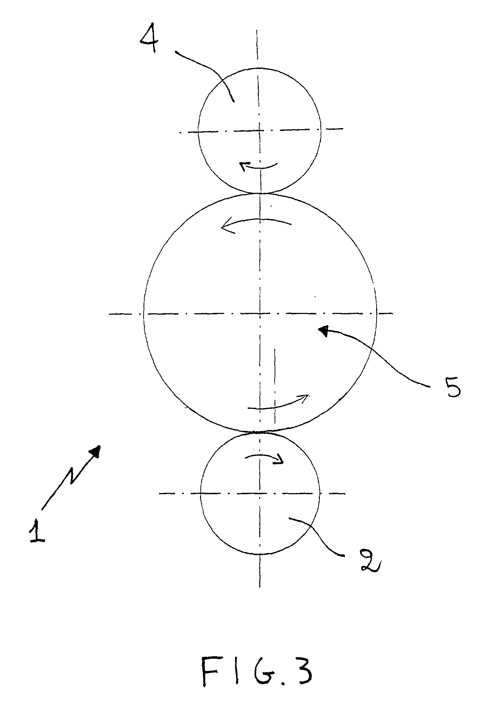

Conveniently, depending on requirements (for instance when engines of a relatively short stroke are concerned or engines in which timing gears of great diameter can be installed), the gear cascade can be merely made up of three elements, i.e. the initial driving element 2, the main adjusting element 5 and the final driving element 4 (as viewed from Figs. 2 and 3); in this case maintenance of synchronisation, and consequently of the correct valve timing, is fully ensured by the main adjusting element 5 which is put in timed relationship with the initial driving element 2 and in turn exerts an adjusting action on the final driving element 4.

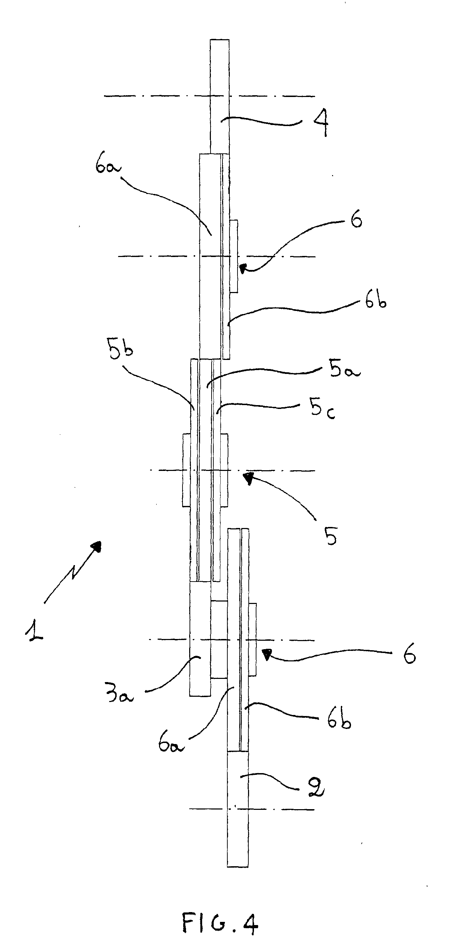

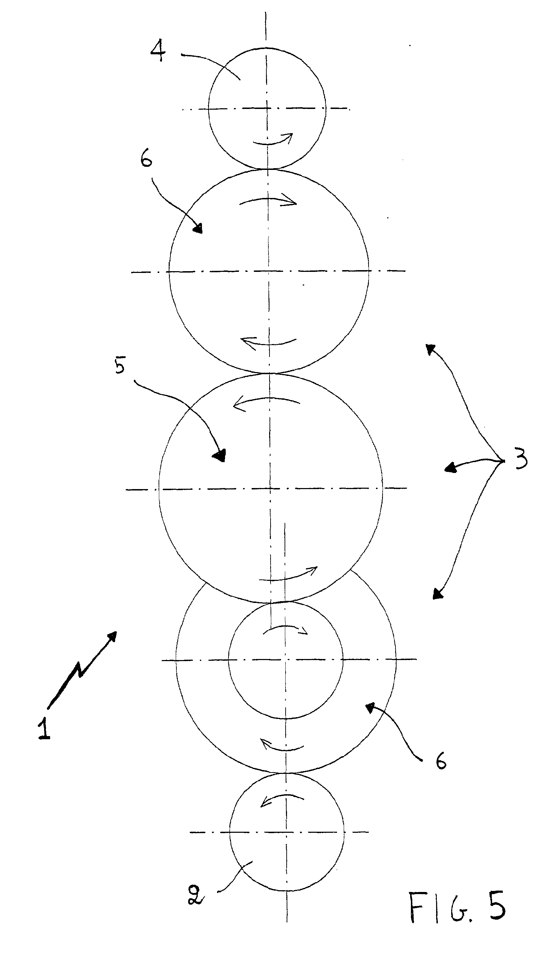

On the contrary, when required by the technical/operating characteristics connected with the general engine design (for instance, in very-long-stroke engines or at all events in engines characterized by an important vertical extension of the thermal unit and the admission and discharge ducts in the head), the gear cascade is typically made up of more than three elements: in this case, the main adjusting element 5 is indirectly connected with the final driving element 4 through at least one intermediate driving element 3 which is the following one in the transmission sequence. Conveniently, the main adjusting element 5 can be also indirectly connected with the initial driving element 2 through at least one intermediate driving element 3 which is the preceding one in the transmission sequence, still depending on current technical requirements (as can be seen in Figs. 4 and 5).

In short, the transmission device 1 for transmitting motion in accordance with the present invention contemplates different architectures to form the gear cascade, in which the main adjusting element 5 is, turn by turn, either directly connected with the initial driving element 2 and/or the final driving element 4, or indirectly connected to said driving elements through interposition of one or more intermediate driving elements 3 which follow and/or precede it along the transmission sequence.

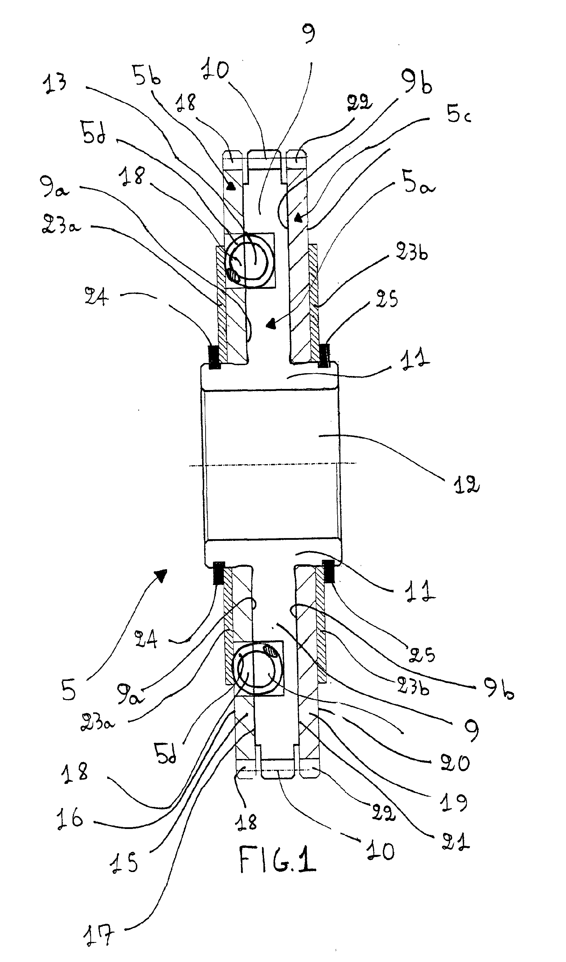

As can be viewed from Fig. 1, the main adjusting element 5 first of all comprises a main drive body 5a, kinematically connected with a driving element following the main adjusting element 5 in the transmission sequence; in addition, the main drive body 5a is kinematically connected with a driving element preceding the main adjusting element 5 in the transmission sequence. In other words, the main drive body 5a simultaneously meshes with two gearwheels in the transmission sequence according to modalities to be described in more detail in the following.

It is to be noted that the two driving elements with which the main drive body 5a is connected can be, consistently with the above description, either the initial element 2 and an intermediate element 3, or two intermediate elements 3, or even an intermediate element 3 and the final element 4; in other words, the main drive body 5a which is essentially a gearwheel, receives motion from a gear preceding it along the transmission sequence and transmits motion to the gear following it (along the same sequence).

Operatively connected with the main drive body 5a is a primary synchronizing member 5b; this primary synchronizing member 5b is active on the main drive body 5a to eliminate a possible phase displacement of the latter with respect to the preceding driving element in the transmission sequence (which may be, depending on circumstances, the initial element 2 or the intermediate element 3).

Advantageously, the main adjusting element 5 further comprises a secondary synchronizing member 5c which is operatively connected with the main drive body 5a as well but, unlike the primary synchronizing member 5b, is active on the driving element in the transmission sequence (which may be, according to circumstances, an intermediate element 3 or the final element 4) following the main adjusting element to eliminate a phase displacement between the primary drive body 5a and the following driving element itself.

The main adjusting element 5 further comprises synchronization recovering means 5d which can be formally divided into two operating groups: as a matter of fact, there is the presence of synchronization recovering means 5d interposed between the main drive body 5a and the primary synchronizing member 5b (and obviously operatively active on the above two components to keep them in a given mutual timed relationship) and, in addition to it, there is the presence of synchronization recovering means 5d interposed between the main drive body 5a and the secondary synchronizing member 5c (and obviously operatively active on the above two components) to keep them in a given mutual timed relationship.

The function of the synchronization recovering means 5d is exactly that of eliminating any possible phase displacement between the gearwheels of the chain; in fact, each time a backlash is generated (due to thermal deformations, vibration, mechanical wear or others) between the main drive body 5a and at least one of the two gearwheels meshing therewith, the predetermined timed relationship established between the main drive body 5a and the last-mentioned gearwheels moves from its nominal value (that can be zero or a given angle depending on the preload imparted to means 5d, for example).

Consequently, the synchronization recovering means automatically exerts a mechanical action on the main drive body 5a, suitably addressed to bring the gear teeth back to the correct meshing conditions; in this way, a correct valve lift is efficiently maintained.

It should be pointed out that operation of the main adjusting element 5 enables possible phase-displacement advances or retardations to be efficiently counteracted, by virtue of the simultaneous presence of the primary 5b and secondary 5c synchronizing members, but above all by virtue of the fact that these two members, by operating simultaneously, are capable of influencing each other, and ultimately keeping synchronization of device 1 tightly close to the technical specifications.

As to the synchronization recovering means 5d, it mainly comprises a given number of primary spring bodies 7 (shown in Fig. 1), preferably consisting of helical springs or at all events spring bodies capable of exerting a force directed tangentially of the rotation direction of the gearwheels on which they are mounted; in accordance with the present invention, the primary spring bodies 7 are operatively active between the main drive body 5a and the primary synchronizing member 5b.

In addition, the synchronization recovering means 5d further comprises a given number of secondary spring bodies 8 (not shown in Fig. 1), which are substantially identical with the primary spring bodies 7; the secondary spring bodies 8 are operatively active between the main drive body 5a and the secondary synchronizing member 5c.

The main drive body 5a is essentially made up of an active portion 9 which substantially has a circular shape and two mutually opposite faces 9a, 9b. Conveniently, the active portion 9 externally has, close to its edge, a plurality of meshing teeth 10 obviously intended to transmit motion from one gear to the other.

Still with reference to Fig. 1, a fitting portion 11 is provided at the centre of the active portion 9 and it has a through cavity 12 intended to be (at least partly) passed through by a rotation pin which typically will be mounted in appropriate seatings formed in the cases usually surrounding device 1.

For the purpose of housing the primary spring bodies 7, the main drive body 5a has a plurality of primary holding seatings 13 which are formed in the first face 9a (they can even be through cavities crossing the active portion 9, if gears of particularly reduced thickness are concerned) of the active portion 9; suitably, the secondary spring bodies 8 are housed in a plurality of secondary holding seatings 14 formed in the second face 9b of the active portion 9.

Advantageously, in order to minimize bulkiness without on the other hand impair the structural integrity of the gears, the primary holding seatings 13 and secondary holding seatings 14 are radially disposed on the active portion 9 following a given angular distribution (typically, they are spaced apart from each other the same angular distance relative to the gear centre and are disposed at a constant radial distance from the centre itself).

In particular, the primary holding seatings 13 and secondary holding seatings 14 are disposed on opposite faces of the active portion 9; it is to be noted that there is such a succession of primary and secondary holding seatings 13, 14 that they are offset by a given angle selected depending on current technical requirements.

As regards the primary synchronizing member 5b, still with reference to Fig. 1, it first of all comprises a primary disc-shaped body 15 pivotally mounted on the fitting portion 11; this primary disc-shaped body 15 has an outer face 16 and an inner face 17 which are mutually opposite and a plurality of primary adjusting teeth 18 (close to the body edge). The inner face 16 is conveniently such disposed that it adjoins the first face 9a of the active portion 9 under operating conditions.

Also present is a plurality of primary housing recesses 18 formed in the primary disc-shaped body 15 and intended to house (in cooperation with the primary holding seatings 13) the primary spring bodies 7; advantageously, the primary housing recesses 18 substantially match with the primary holding seatings 13 under operating conditions, so as to enable a correct operation of the spring bodies which must exert their mechanical actions on the main drive body 5a and the primary synchronizing member 5b.

Likewise, the secondary synchronizing member 5c has a structure substantially similar to that of the primary synchronizing member 5b, and it exactly comprises a secondary disc-shaped body 19 (pivotally mounted on the fitting portion 11); this secondary disc-shaped body 19 has an outer face 20 opposite to an inner face 21 (adjoining the second face 9b of the active portion 9 under operating conditions), a plurality of secondary adjusting teeth 22 close to the body edge and finally a plurality of secondary housing recesses 23.

The secondary housing recesses 23 are formed in the secondary disc-shaped body 19 and house the secondary spring bodies 8 substantially following the same modalities as described with reference to the primary housing recesses 18 (therefore the secondary housing recesses 23 substantially match with the secondary holding seatings 14 under operating conditions).

Advantageously, the main adjusting element 5 further comprises holding means connected with the main drive body 5a to keep it in contact with the primary synchronizing member 5b and the secondary synchronizing member 5c under operating conditions.

In particular, as viewed from Fig. 1, the holding means comprises a primary annular body 23a operatively active on the outer face 16 of the primary disc-shaped body 15 to keep it close to the first face 9a of the active portion 9 and a secondary annular body 23b operatively active on the outer face 20 of the secondary disc-shaped body 19 to keep it close to the second face 9b of the active portion 9.

In accordance with the present invention, the holding means further comprises a primary pusher element 24 which is operatively active on the primary annular body 23a to keep it substantially close to the primary disc-shaped body 15, and a secondary pusher element 25 which is operatively active on the secondary annular body 23b to keep it substantially close to the secondary disc-shaped body 19. Conveniently, for simplicity of construction and reliability in operation, the primary pusher element 24 and secondary pusher element 25 are Seger rings.

Where several intermediate driving elements 3 are present in the transmission sequence, the device 1 can advantageously have a given number of auxiliary adjusting elements 6, each of which is disposed along the transmission sequence so as to be operatively active on one driving element (which can indifferently be any element, either the initial driving element 2 or another intermediate driving element 3) suitably disposed along the transmission sequence, to keep it in timed relationship.

In more detail, each of the auxiliary adjusting elements 6 first comprises a driving gearwheel 6a which is disposed in meshing relationship at least with one preceding or following (initial 2, intermediate 3 or final 4) driving element in the transmission sequence; also present is an adjusting gearwheel 6b, connected with the driving gearwheel 6a and operatively active thereon to eliminate a phase displacement of same with respect to the preceding driving element in the transmission sequence.

The auxiliary adjusting elements 6, like the main adjusting element 5, have auxiliary synchronization recovering means 6c preferably consisting of helical springs mounted in the auxiliary adjusting elements 6 substantially in the same manner as the synchronization recovering means 5d; in particular, the auxiliary synchronization recovering means 6c is disposed on the driving gearwheel 6a and the adjusting gearwheel 6b and obviously said means is operatively active between these two components.

It is to be noted that the auxiliary adjusting elements 6 perform their function of maintaining synchronization only on a gear of the transmission sequence and their presence is made necessary if the device 1 has a number of gears higher than tree.

In accordance with the present invention (and also with reference to Fig. 4), any element of the intermediate driving elements 3 may further comprise a meshing expansion 3a; this meshing expansion 3a is rigid with the main drive body 5a or the driving gearwheel 6a and is intended to be disposed in meshing relationship with a preceding or following (initial, intermediate or final) driving element, 2, 3 or 4 respectively, in the transmission sequence. The presence of the meshing expansion 3a is essentially due to space reasons or to the necessity to set an appropriate gear ratio between two gearwheels of the gear cascade.

The invention achieves important advantages.

First of all, due to the presence of two adjusting elements on a single wheel, an important simplification in the general architecture of the kinematic mechanism of the gear chain is allowed, since the overall number of gears is reduced as compared with known solutions and since this gear reduction does not impair maintenance of synchronization for each meshing between two gearwheels.

In addition, adoption of a dual adjustment leads to a greater efficiency in the kinematic mechanism of the driving system, which on the other hand lasts in time even under very supercharged use conditions (in other words, even in case of important thermal deformations at the gears, or wear and/or bending of the wheel teeth following important mechanical stresses); this constitutes an advantage in terms of prolonged efficiency of the engine, above all when used for competitive purposes.

In combination with this characteristic, the present invention enables the overall dimensions to be reduced above all at the gears fitted on the camshafts, that in known solutions generally have an adjusting wheel (and therefore are very bulky), whereas in the present invention they are mere gearwheels, so that their radius can be reduced, for the benefit of a better balancing of the rotating masses and compactness of the cylinder head, which will bring about achievement of higher rotation speeds.

Another advantage of the present invention resides in that the synchronizing action performed by the dual-adjustment wheel also appears in the operating conditions of the engine when the equilibrium temperature has not been reached yet; as a result, a better efficiency of the "cold" engine is obtained (due to maintenance of an optimal timing) and at the same time an important reduction in the mechanical noise.

It is also to be noted that compactness and construction simplicity of the gear cascade of the driving system in accordance with the present invention enables use of particularly simple and compact engine cases, which will bring about a reduction in the sizes of the whole engine and therefore in the weight and agility of the motor-vehicle on which the engine is mounted.

In conclusion, the simpler gear cascade, the reduction in the overall sizes and greater efficiency under operating conditions favourably affect the reliability and servicing of the driving system itself (and, as a result, the engine on which this driving system is mounted), since the more reduced causes of wear and the ability to keep timing unchanged in time make intervals between interventions for mechanical maintenance more spaced out.

## Claims

**1.** A transmission device, preferably for actuating members of intake and/or exhaust valves in internal combustion engines, comprising:
- at least one initial driving element (2), preferably connectable with a mechanical power source (2a);
- a predetermined number of intermediate driving elements (3) mutually interconnected in a preestablished transmission sequence starting from said initial driving element (2); and
- a final driving element (4) operatively connected with at least one intermediate driving element (3), which final driving element (4) can be preferably interlocked with valve actuation means (4a);
**characterized in that** said predetermined number of intermediate driving elements (3) further comprises at least one main adjusting element (5) kinematically interposed between, and either directly or indirectly simultaneously active on, the initial driving element (2) and the final driving element (4), to keep them in mutual timed relationship.

**2.** A device as claimed in claim 1, **characterized in that** the main adjusting element (5) is directly connected to the initial driving element (2).

**3.** A device as claimed in claim 1, **characterized in that** the main adjusting element (5) is indirectly connected to the initial driving element (2) through at least one intermediate driving element (3) preceding it in the transmission sequence.

**4.** A device as claimed in anyone of the preceding claims, **characterized in that** the main adjusting element (5) is directly connected to the final driving element (4).

**5.** A device as claimed in anyone of the preceding claims 1 to 3, **characterized in that** the main adjusting element (5) is indirectly connected to the final driving element (4) through at least one intermediate driving element (3) following it in the transmission sequence.

**6.** A device as claimed in anyone of the preceding claims, **characterized in that** the initial driving element (2) and/or the final driving element (4) and/or the predetermined number of intermediate driving elements (3) comprise a predetermined number of gearwheels, said gearwheels being disposed in meshing relationship in accordance with said transmission sequence, starting from the initial driving element (2) through the intermediate driving elements (3) and ending with the final driving element (4).

**7.** A device as claimed in anyone of the preceding claims, **characterized in that** said main adjusting element (5) comprises:
- a main drive body (5a), kinematically connected with a driving element following the main adjusting element (5) in the transmission sequence and connected with a driving element preceding the main adjusting element (5) in the transmission sequence;
- a primary synchronizing member (5b) operatively connected with the main drive body (5a), said primary synchronizing member (5b) being active on the main drive body (5a) to eliminate a phase displacement of same with respect to the driving element (2; 3) preceding it in the transmission sequence;
- a secondary synchronizing member (5c) operatively connected with the main drive body (5a), said secondary synchronizing member (5c) being active on the main drive body (5a) to eliminate a phase displacement of same with respect to the driving element (3; 4) following it in the transmission sequence; and
- synchronization recovering means (5d) operatively active on, and interposed both between the main drive body (5a) and the primary synchronizing member (5b), and between the main drive body (5a) and the secondary synchronizing member (5c) to keep them in a predetermined timed relationship.

**8.** A device as claimed in claim 7, **characterized in that** said synchronization recovering means (5d) comprises:
- a predetermined number of primary spring bodies (7), preferably helical springs, operatively active between the main drive body (5a) and the primary synchronizing member (5b); and
- a predetermined number of secondary spring bodies (8), preferably helical springs, operatively active between the main drive body (5a) and the secondary synchronizing member (5c).

**9.** A device as claimed in claims 7 and 8, **characterized in that** the main drive body (5a) comprises:
- an active portion (9) substantially of circular shape and having a first face (9a) and a second face (9b) opposite to said first face (9a), said active portion (9) externally having a plurality of meshing teeth (10);
- a fitting portion (11) disposed at the centre of the active portion (9) and having a through cavity (12) intended to be at least partly crossed by a rotation pin;
- a plurality of primary holding seatings (13) formed at least on the first face (9a) of the active portion (9) to house the primary spring bodies (7); and
- a plurality of secondary holding seatings (14) formed at least on the second face (9b) of the active portion (9) to house the secondary spring bodies (8).

**10.** A device as claimed in claim 9, **characterized in that** the primary holding seatings (13) and/or secondary holding seatings (14) are radially disposed on the active portion (9) in a predetermined angular arrangement, preferably spaced apart the same distance from each other.

**11.** A device as claimed in claim 10, **characterized in that** the primary holding seatings (13) and secondary holding seatings (14) are disposed on opposite faces of the active portion (9), being preferably offset by a predetermined angle.

**12.** A device as claimed in anyone of claims 7 to 11, **characterized in that** the primary synchronizing member (5b) comprises:
- a primary disc-shaped body (15) pivotally mounted on the fitting portion (11), having an outer face (16) and an inner face (17) and a plurality of primary adjusting teeth (18) close to the body edge, the inner face (16) adjoining the first face (9a) of the active portion (8) under operating conditions;
- a plurality of housing recesses (18) formed in the primary disc-shaped body (15) and intended to house the primary spring bodies (7), said housing recesses (18) substantially matching with the primary holding seatings (13) under operating conditions.

**13.** A device as claimed in anyone of claims 8 to 12, **characterized in that** the secondary synchronizing member (5c) comprises:
- a secondary disc-shaped body (19) pivotally mounted on the fitting portion (11), having an outer face (20) and an inner face (21) and a plurality of secondary adjusting teeth (22) close to the body edge, the inner face (20) adjoining the second face (9b) of the active portion (9) under operating conditions;
- a plurality of secondary housing recesses (23) formed in the secondary disc-shaped body (19) and intended to house the secondary spring bodies (8), said secondary housing recesses (23) substantially matching with the secondary holding seatings (14) under operating conditions.

**14.** A device as claimed in anyone of the preceding claims 8 to 13, **characterized in that** the main adjusting element (5) further comprises holding means at least connected with the main driving element to keep it in contact with the primary synchronizing member (5b) and the secondary synchronizing member (5c) under operating conditions.

**15.** A device as claimed in claim 14, **characterized in that** the holding means comprises a primary annular body (23a) operatively active on the outer face (16) of the primary disc-shaped body (15) to keep it close to the first face (9a) of the active portion (9).

**17.** A device as claimed in claim 14, **characterized in that** the holding means (23) comprises a secondary annular body (23b) operatively active on the outer face (20) of the secondary disc-shaped body (19) to keep it close to the second face (9b) of the active portion (9).

**18.** A device as claimed in anyone of the preceding claims 14 to 17, **characterized in that** the holding means (23) further comprises:
- a primary pusher element (24) operatively active on the primary annular body (23a) to substantially keep it close to the primary disc-shaped body (15); and
- a secondary pusher element (25) operatively active on the secondary annular body (23b) to keep it substantially close to the secondary disc-shaped body (19).

**19.** A device as claimed in claim 18, **characterized in that** the primary pusher element (24) and/or the secondary pusher element (25) are Seger rings.

**20.** A device as claimed in anyone of the preceding claims, **characterized in that** the intermediate driving elements (3) comprise a predetermined number of auxiliary adjusting elements (6) each of said auxiliary adjusting elements (6) being operatively active on a driving element (2) or (3) or (4) preceding or following it along said transmission sequence, in order to keep it in timed relationship.

**21.** A device as claimed in claim 20, **characterized in that** the auxiliary adjusting elements (6) comprise:
- a driving gearwheel (6a) disposed in meshing relationship at least with one driving element (2), or (3) or (4) preceding or following it in the transmission sequence;
- an adjusting gearwheel (6b) connected with said driving gearwheel (6a) and operatively active thereon to eliminate a phase displacement of same with respect to the driving element (2) or (3) or (4) preceding it in the transmission sequence; and
- auxiliary synchronization recovering means (6c), preferably helical springs, disposed between, and operatively active on, the driving gearwheel (6a) and the adjusting gearwheel (6b).

**22.** A device as claimed in anyone of the preceding claims, **characterized in that** any element of the intermediate driving elements (3) further comprises a meshing expansion (3a) rigid with the main drive body (5a) or the driving gearwheel (6a) and intended to be disposed in meshing relationship with a driving element (2) and/or (3) and/or (4) preceding it or following it in the transmission sequence.
